# EUROPÄISCHE PATENTSCHRIFT

(11) **EP 3 732 143 B1**
(45) Veröffentlichungstag und Bekanntmachung des Hinweises auf die Patenterteilung: **10.11.2021**
(21) Anmeldenummer: 18836253.7
(22) Anmeldetag: 21.12.2018
(51) Int. Cl.: C04B 7/32

(54) **TONERDEZEMENT**
ALUMINOUS CEMENT
CIMENT ALUMINEUX

(30) Priorität: 28.12.2017 DE 102017131392
(43) Veröffentlichungstag der Anmeldung: 04.11.2020
(73) Patentinhaber: Calucem GmbH, 68219 Mannheim (DE)
(72) Erfinder: WALENTA, Guenther, 69740 GENAS (FR); KADEN, Ronny, 68535 Edingen-Neckarhausen (DE); SCHMID, Markus, 90491 Nuernberg (DE)
(74) Vertreter: DREISS Patentanwälte PartG mbB
(86) Internationale Anmeldenummer: PCT/EP2018/086726
(87) Internationale Veröffentlichungsnummer: WO 2019/129737

(56) Entgegenhaltungen:
- EP-B1- 2 803 649

## Beschreibung

Die vorliegende Erfindung betrifft einen Tonerdezement, insbesondere einen im Schmelzverfahren hergestellten Tonerdezement.

Tonerdezemente sind in der EN 14647 genormt. Auf Grund ihres im Vergleich zu Portlandzement erheblich höheren Aluminatgehaltes, wurden sie im englischen Sprachraum zunächst als High Alumina Cement bezeichnet. In Deutschland war und ist noch die Bezeichnung Tonerdezement üblich. In der Literatur hat sich der Name Calcium-Aluminate Cement durchgesetzt, in Analogie zu den Portlandzementen, bei denen es sich um Calcium-Silicate-Cements handelt.

Handelsübliche Tonerdezemente enthalten üblicherweise 36 - 82 Gew.-% Aluminiumoxid Al₂O₃. Sie können bspw. nach dem Schmelz- oder nach dem Sinterverfahren hergestellt sein. Die verschiedenen Tonerdezement - Typen können in die Kategorien: eisenreich, eisenarm und eisenfrei eingeteilt werden.

Typische eisenreiche Tonerdezemente werden im Schmelzverfahren hergestellt, besitzen eine graue bis schwarzgraue Farbe und können in ihrer chemischen Zusammensetzung folgendermaßen charakterisiert werden: 36 - 42 % Al₂O₃, 2 - 6 % SiO₂, 14 - 19 % Fe₂O₃, 37 - 40 % CaO und weniger als 1,5 % MgO sowie weniger als 0,4 % SO₃.

Eisenarme Tonerdezemente sind beige bis grau gefärbt und enthalten typischerweise:
50 - 55 % Al₂O₃, 2 - 6 % SiO₂, 1 - 3 % Fe₂O₃, 37 - 40 % CaO sowie weniger als 1,5 % MgO und weniger als 0,4 % SO₃.

Eisenfreie Tonerdezemente werden von EN 14647 nicht erfasst, sind von weißer Farbe und entsprechend hohem Helligkeitsgrad, werden üblicher Weise im Sinterverfahren hergestellt, können zugesetztes Al₂O₃ enthalten und weisen deshalb die folgenden, typischen Zusammensetzungen auf:
68 - 85 % Al₂O₃, < 1 % SiO₂, < 0,5 % Fe₂O₃, 26 - 31 % CaO.

Bei der Herstellung von Tonerdezementen bilden sich je nach dem gewählten Verhältnis von Aluminiumoxid Al₂O₃ zu Calciumoxid CaO folgende mineralische Phasen:
- bei eisenreichem Tonerdezement: Monocalciumaluminat (CA), Brownmillerit (C₄AF), Belit (C₂S), Gehlenit (C₂AS), Mayenit (C₁₂A₇) und Perowskit (CT)
- bei eisenarmem Tonerdezement: CA, C₂AS, CT, C₁₂A₇ und
- bei eisenfreiem Tonerdezement: CA, CA₂, C₁₂A₇, A.
   Dabei bedeuten, der zementchemischen Kurzschreibweise entsprechend:
   C: CaO; A: Al₂O₃; F: Fe₂O₃; H: H₂O; AH₃: 2Al(OH)₃; S: SiO₂; und T: TiO₂.
   Zur chemischen und mineralogischen Zusammensetzung von Tonerdezementen siehe z.B. Taylor, "Cement Chemistry", 2. Aufl., S. 296 und
   "Lea's Chemistry of Cement and Concrete", 4. Aufl., 2004, S. 716ff.

Die hydraulischen Eigenschaften der Tonerdezemente, d.h. ihre, im Vergleich zu aufwendiger herzustellenden Portlandzementen sehr hohe Frühfestigkeitsentwicklung bereits im Stundenbereich, gehen vor allem auf die Phase Monocalciumaluminat CA zurück. Die Reaktion des in höher Al₂O₃-haltigen Tonerdezementen vorhandenen CA₂ mit Wasser, erfolgt dagegen langsamer. Die Phasen CA und, falls vorhanden C₁₂A₇, sind die einzigen, früh mit Wasser reagierenden Phasen in Tonerdezementen, siehe z.B. Taylor, "Cement Chemistry", 2. Aufl., S. 298 und "Lea's Chemistry of Cement and Concrete", 4. Aufl., 2004, S. 727. Die "hydraulische Reaktivität" von Calciumaluminaten, d.h. ihre Reaktionsfähigkeit gegenüber Wasser, nimmt mit steigendem Mol-Verhältnis C/A zu, wie es in der folgenden Tabelle 1 dargestellt ist.

**Tabelle 1 Relative hydraulische Reaktivität von Calciumaluminaten**

| Calciumaluminat | Mol-Verhältnis C/A | Relative Reaktivität |
|---|---|---|
| C₃A | 3.0 | Sehr hoch |
| C₁₂A₇ | 1.7 | Sehr hoch |
| CA | 1.0 | Hoch |
| CA₂ | 0.5 | Sehr gering |
| CA₆ | 0.17 | inert |

Ein zu hoher Gehalt an C₁₂A₇ kann aufgrund seiner sehr hohen hydraulischen Reaktivität zu einem frühen Ansteifen des Tonerdezementes führen.

Die festigkeitsbildende Hydratationsreaktion zwischen der Phase CA und Wasser verläuft prinzipiell in folgender Weise:

| | | | |
|---|---|---|---|
| Reaktion 1 | CA + 10H | -> | CAH₁₀ |
| Reaktion 1.1 | 2CA + 11H | -> | C₂AH₈ + AH₃ |
| Reaktion 1.2 | 3CA + 12H | -> | C₃AH₆ + 2AH₃ |
| Reaktion 2 | 2CAH₁₀ | -> | C₂AH₈ + AH₃ + 9H |
| Reaktion 3 | 3C₂AH₈ | -> | 2C₃AH₆ + AH₃ + 9H |
| Reaktion 4 | C₁₂A₇ + 51H | -> | 6C₂AH₈ + AH₃ |

Die Material- und Umgebungstemperatur spielt bei der Hydratation von Tonerdezementen eine größere Rolle, als dies bei den Portlandzementen der Fall ist. Die Bildung von metastabilem CAH₁₀ nach Reaktion 1 läuft bei Temperaturen <10°C bevorzugt ab. Bei höheren Temperaturen zwischen 10°C und 27°C bildet sich nach Reaktion 1.1 metastabiles C₂AH₈ und AH₃ neben CAH₁₀. Bei höheren Temperaturen bildet sich zunehmend nach Reaktion 1.2 zusätzlich das stabile Hydrat C₃AH₆. C₁₂A₇ hydratisiert bevorzugt direkt nach Reaktion 4 zu C₂AH₈ und AH₃. Die Reaktionen 2 und 3 zeigen, dass auch primär gebildetes CAH₁₀ bei Temperaturen >10°C nach und nach in C₂AH₈ und C₃AH₆ übergeht, unter deutlicher Volumenverringerung und Freisetzung von Aluminiumhydroxid und Wasser.

Üblicherweise liegen die Mineralphasen in Tonerdezementklinkern weit überwiegend in kristalliner Form vor, so dass die Beschreibung ihrer Hydratation entsprechend den chemischen Reaktionen 1 bis 4 in der gezeigten Weise möglich und sinnvoll ist. Grundsätzlich können aber, in Abhängigkeit von der nach dem Sinter- oder Schmelzprozess angewandten Kühlmethode, neben den kristallinen- auch kryptokristalline und amorphe Anteile vorhanden sein, die sich auf die hydraulische Reaktivität und die allgemeinen technischen Eigenschaften des Tonerdezementes auswirken können.

Tonerdezemente n. EN 14647 sind allerdings keine sogenannten Schnellzemente. Eine wichtige Eigenschaft besteht darin, dass sie nach dem Anmachen mit Wasser, analog zu den Portlandzementen, zunächst eine Ruhephase von einer bis mehreren Stunden aufweisen. Entsprechend EN 14647 darf der nach EN 196-3 bestimmte Erstarrungsbeginn frühestens nach 90 Minuten eintreten. So lassen sich normgerechte Tonerdezemente ausgezeichnet zu Mörtel und Beton verarbeiten und können auch transportiert werden. Nach dem Erstarren durchlaufen sie dann aber eine im Vergleich zu Portlandzementen ungleich schnellere Hydratation, mit der Folge einer hohen Druckfestigkeitsentwicklung bereits innerhalb weniger Stunden.

Handelsübliche, eisenreiche Tonerdezemente wie sie z.B. unter den Bezeichnungen Istra 40 (Calucem), Ciment Fondu (Kerneos), Electroland (Cementos Molins) sowie Gorkal 40 (Gorka) im Handel sind, eisenarme Tonerdezemente wie z.B. Istra 50 (Calucem), Secar 51 (Kerneos), Gorkal 50 (Gorka) und eisenfreie Tonerdezemente wie z.B. Gorkal 70 (Gorka), Secar 71 (Kerneos) und CA 14 (Almatis), können, geprüft an Normenmörtel nach EN 14647, nach 6 Stunden bereits Druckfestigkeiten aufweisen, die denjenigen von Portlandzementen der Güteklasse CEM I 32.5 oder sogar der Güteklasse 42.5 nach 28 Tagen entsprechen. Die Hauptanwendung von Tonerdezementen liegt in Rezepturen der Bauchemie, feuerfesten Mörteln und Betonen der Feuerfestindustrie und weiteren speziellen Einsatzgebieten. Solche Gebiete sind z.B. Auskleidungen von Abwasserrohren bei Vorhandensein saurer oder aggressiver Wässer, denen Portlandzemente nicht ausreichenden Widerstand bieten, oder die Verfestigung problematischer Abfallstoffe und Demobilisierung von Schadstoffen, die die Erhärtung von Portlandzementen be- oder verhindern. Aber auch in der Abwasseraufbereitung, z.B. zur Entsulfatisierung, durch Bildung von schwerlöslichen Calciumaluminatsulfathydraten, werden Tonerdezemente eingesetzt.

In geeigneter Weise hergestellte Mischungen aus Tonerdezementen mit Portlandzementen führen zu Bindemitteln die, nach dem Anmachen mit Wasser, kurze Erstarrungs- bzw. Erhärtungszeiten aufweisen. Auf Grund dieser Eigenschaft ermöglichen Tonerdezemente, als beschleunigender Bestandteil der unterschiedlichsten bauchemischen Rezepturen, nach deren Anmachen mit Wasser, ein im Zeitraum weniger Minuten bis Stunden genau einstellbares Erstarrungs- und Erhärtungsverhalten von Fließmassen, Pasten, Mörteln und Betonen.

Zum Erreichen und genauen Regeln zusätzlicher Eigenschaften enthalten derartige bauchemische Rezepturen oft eine Vielzahl von weiteren Zusätzen, wie z.B. Erstarrungsverzögerer und/oder -Beschleuniger, Fließmittel, "Konsistenzgeber", Füllstoffe usw. mit deren Hilfe z.B. das Erstarrungsverhalten eingestellt, der Wasserbedarf zum Erreichen einer bestimmten Konsistenz verringert, das Wasserrückhaltevermögen erhöht und das Haftungsvermögen an bestimmten Materialien und Werkstoffen verbessert werden kann, wie das z.B. bei Putz und Fliesenkleber erforderlich ist. Eine auch nur annähernd vollständige Aufzählung der handelsüblichen bauchemischen Produkte ist kaum möglich. Die Entwicklung und Optimierung der Rezepturen bis zur Marktreife ist meist sehr aufwändig und langwierig. Die genauen Zusammensetzungen stellen deshalb in der Regel Industriegeheimnisse dar.

EP 2 803 649 B1 beschreibt einen weißen, eisenfreien Tonerdezement und dessen Verwendung in feuerfesten Mörteln und Betonen. Der Tonerdezement weist einen hohen Gehalt an Monocalciumaluminat CA auf und dadurch eine sehr hohe hydraulische Reaktivität (Produktname: HiPerCem, Firma Calucem GmbH). Durch den aufgrund seiner hohen hydraulischen Reaktivität geringen benötigten Bindemittelanteil in Feuerfestmörteln- und betonen basierend auf diesem Tonerdezement werden seine im direkten Vergleich zu handelsüblichen, speziellen Tonerdezementen geringeren Feuerfesteigenschaften kompensiert bzw. überkompensiert.

Der vorliegenden Erfindung liegt die Aufgabe zugrunde, einen kostengünstig herstellbaren Tonerdezement mit hoher hydraulischer Reaktivität bereitzustellen.

Diese Aufgabe wird durch einen Tonerdezement nach Anspruch 1 gelöst.

Der erfindungsgemäße Tonerdezement zeigt eine im Vergleich zum Stand der Technik unerwartet hohe hydraulische Reaktivität.

Die Herstellung eines weißen, eisenfreien Tonerdezementes, wie er aus dem Stand der Technik bekannt ist, ist an besondere, rein weiße Rohstoffkomponenten, ein geeignetes Ofensystem, besondere Brennstoffe und, zur Vermeidung von Eiseneinträgen, auch besondere Mahlsysteme gebunden. Die Herstellung des erfindungsgemäßen Tonerdezementes kann auf üblichen Ofensystemen unter Verwendung üblicher, kostengünstiger Brennstoffe erfolgen. Neben hochwertigen Rohstoffen können bestimmte Recycling Materialien, z.B. aus der Feuerfestindustrie, anteilig als Rohmaterialkomponenten eingesetzt werden. Die Vermahlung des Klinkers kann auf allen geeigneten Mahlsystemen des Standes der Technik, einschließlich herkömmlicher Kugelmühlen erfolgen. Auf diese Weise wird ein vielseitig einsetzbarer, vergleichsweise kostengünstiger Tonerdezement von außergewöhnlich hoher hydraulischer Reaktivität und einer daraus folgenden, breiten Einsatzfähigkeit bereitgestellt.

Der erfindungsgemäße Tonerdezement kennzeichnet sich dadurch, dass er mindestens 75 Gew.-% und höchstens 89 Gew.-%

Monocalciumaluminat, CA in kristalliner oder amorpher Form oder als Mischung aus kristallinen und armorphen Anteilen, enthält, wobei er wenigstens 53 Gew.% Aluminiumoxid berechnet als Al₂O₃ enthält und einen A/C-Wert basierend auf Gew% im Bereich von 1,45 bis 1,85 aufweist, höchstens 39 Gew.-% Calciumoxid enthält, eine Mahlfeinheit nach Blaine von 3500 bis 6000 cm²/g aufweist, ein Steigungsmaß n im Bereich von 0,7 bis 1,5 aufweist und einen Lageparameter x' von 8 - 30 µm in einem RRSB Körnungsnetz nach DIN 66145 aufweist und seine Farbe im L*a*b* Farbsystem im Wertebereich: L* < 85, bevorzugt < 80, liegt.

Im Sinne der vorliegenden Erfindung ist davon unabhängig ebenso ein Tonerdezement, der sich dadurch kennzeichnet, dass er mindestens 75 Gew.% und höchstens 89 Gew.-% Monocalciumaluminat, CA in kristalliner oder amorpher Form oder als Mischung aus kristallinen und armorphen Anteilen, enthält, wobei er wenigstens 53 Gew.-% Aluminiumoxid berechnet als Al₂O₃ enthält und einen A/C-Wert basierend auf Gew% im Bereich von 1,45 bis 1,85 aufweist, höchstens 39 Gew.-% Calciumoxid enthält, eine Mahlfeinheit nach Blaine von 3500 bis 6000 cm²/g aufweist, ein Steigungsmaß n im Bereich von 0,7 bis 1,5 aufweist und einen Lageparameter x' von 8 - 30 µm in einem RRSB Körnungsnetz nach DIN 66145 aufweist und einen Eisengehalt berechnet als Fe₂O₃ von 0,1 bis 10,0 Gew.-% aufweist, vorzugsweise und einem Gehalt an SiO₂ von 0,2 bis 4 Gew.-% aufweist.

Die Erfindung betrifft auch die Verwendung des Tonerdezementes als Bindemittelkomponente in Rezepturen der bauchemischen Industrie, der Feuerfestindustrie und weiteren Einsatzgebieten für Tonerdezemente.

Die Erfindung betrifft auch Rezepturen der bauchemischen Industrie und/oder der Feuerfestindustrie, die den erfindungsgemäßen Tonerdezement als Bindemittelkomponente enthalten.

Der erfindungsgemäße Tonerdezement, weist im Vergleich zu bekannten, insbesondere eisenhaltigen, nichtweißen Vergleichsprodukten, unter anderem einen signifikant höheren Gehalt an Monocalciumaluminat CA zwischen 75% und 89% auf, bei gleichzeitigem Vorhandensein eines Verhältnisses von Al₂O₃/CaO in Gew.-% im Bereich 1,45 bis 1,85. Insbesondere hierdurch weist der erfindungsgemäße Tonerdezement gegenüber den eben genannten bekannten Vergleichsprodukten eine vorteilhafte hydraulische Reaktivität und Frühfestigkeitsentwicklung, insbesondere innerhalb der ersten 12 Stunden nach dem Anmachen mit Wasser, auf.

Der Lageparameter x' bezeichnet im RRSB Körnungsnetz nach DIN 66145 diejenige Korngröße, bei der der Anteil derjenigen Partikel 36,8 % beträgt, die größer sind als x' (in µ) und der Anteil derjenigen Partikel 63,2 % beträgt, die kleiner sind als x'. Die Steigung n der RRSB Geraden ist ein Maß für die Breite der Verteilung. Je größer der Wert von n ist, desto enger ist die Korngrößenverteilung. Der Wasseranspruch eines Zementes steigt mit zunehmendem Blaine-Wert und kleiner werdendem Lageparameter x' der Korngrößenverteilung an und erhöht sich auch bei gleichem Lageparameter x' mit enger werdender Korngrößenverteilung, siehe z.B. S. Sprung, K. Kuhlmann, H.-G. Ellerbrock, "Korngrößenverteilung und Eigenschaften von Zement", Teil II, ZKG Nr. 9/1985, S. 530 und VDZ Zementtaschenbuch 2002, Pkt. 5, S. 139ff.

Als weitere Mineralphasen können typischer Weise die im Folgenden genannten Mineralphasen vorhanden sein: C₁₂A₇, C₂AS, CA₂, C₄AF, C₂S CT, C₃FT, Mg-Fe Spinelle und Pleochroit. Die Gehalte dieser Phasen können bspw. rohmaterialbedingt und prozessbedingt in den nachfolgend genannten Anteilen vorliegen, C₁₂A₇0 - 3 Gew.-%, C₂AS 1 - 10 Gew.-%, CA₂ 1 - 5 Gew.-%, C₄AF 1 - 7 Gew.-%, C₂S 0.5 - 4Gew.-% und Pleochroit 0.5 - 4 Gew.-%.

Optional ist, wenn der Tonerdezement 0 ≤ Gew.-% C₁₂A₇ ≤ 3, vorzugsweise 0,5 ≤ Gew.-% C₁₂A₇ ≤ 2,5 und besonders bevorzugt 1 ≤ Gew.-% C₁₂A₇ ≤ 2 enthält.

Optional ist, wenn der Tonerdezement 1 ≤ Gew.-% C₂AS ≤ 9, vorzugsweise 2 ≤ Gew.-% C₂AS ≤ 8 und besonders bevorzugt 3 ≤ Gew.-% C₂AS ≤ 7 enthält.

Optional ist, wenn der Tonerdezement 1 ≤ Gew.-% CA₂ ≤ 5, vorzugsweise 1,5 ≤ Gew.-% CA₂ ≤ 4,5 und besonders bevorzugt 2 ≤ Gew.-% CA₂ ≤ 4 enthält.

Optional ist, wenn der Tonerdezement 1 ≤ Gew.-% C₄AF ≤ 7, vorzugsweise 2 ≤ Gew.-% C₄AF ≤ 6 und besonders bevorzugt 3 ≤ Gew.-% C₄AF ≤ 5 enthält.

Optional ist, wenn der Tonerdezement 0,5 ≤ Gew.-% C₂S ≤ 3, vorzugsweise 1 ≤ Gew.-% C₂S ≤ 2,5 und besonders bevorzugt 1,5 ≤ Gew.-% C₂S ≤ 2 enthält.

Optional ist, wenn der Tonerdezement 0,5 ≤ Gew.-% Pleochroit ≤ 4, vorzugsweise 1 ≤ Gew.-% Pleochroit ≤ 3,5 und besonders bevorzugt 1,5 ≤ Gew.-% Pleochroit ≤ 3 enthält.

Die genannten Mineralphasen können im erfindungsgemäßen Tonerdezement neben der kristallinen Form anteilig auch in kryptokristalliner und amorpher Form, oder als Mischungen aus kristallinen, kryptokristallinen und/oder amorphen Formen vorhanden sein. Bei der Angabe von Phasengehalten in Gew.-% sind deren amorphe Anteile gleicher chemischer Zusammensetzung mit umfasst.

Der erfindungsgemäße Tonerdezement kann sich optional dadurch auszeichnen, dass er mindestens 0,1 Gew.-%, vorzugsweise mindestens 0,15 Gew.-%, vorzugsweise mindestens 0,5 Gew.-%, vorzugsweise mindestens 1 Gew.-%, vorzugsweise mindestens 1,5 Gew.-%, vorzugsweise mindestens 2 Gew.-%, vorzugsweise mindestens 2,5 Gew.-%, vorzugsweise mindestens 3 Gew.-%, vorzugsweise mindestens 3,5 Gew.-%, vorzugsweise mindestens 4 Gew.-%, Eisen berechnet als Fe₂O₃ enthält.

Der erfindungsgemäße Tonerdezement kann sich optional dadurch auszeichnen, dass er höchstens 10 Gew.-%, vorzugsweise höchstens 9 Gew.%, vorzugsweise höchstens 8 Gew.-%, vorzugsweise höchstens 7,5 Gew.-%, vorzugsweise höchstens 7 Gew.-%, vorzugsweise höchstens 6,5 Gew.-%, vorzugsweise höchstens 6 Gew.-%, vorzugsweise höchstens 5,5 Gew.-% vorzugsweise höchstens 5 Gew.-%, Eisen berechnet als Fe₂O₃ enthält.

Der erfindungsgemäße Tonerdezement kann sich optional dadurch auszeichnen, dass er mindestens 0,2 Gew.-%, vorzugsweise mindestens 0,3 Gew.-%, vorzugsweise mindestens 0,4 Gew.-%, vorzugsweise mindestens 1 Gew.-%, vorzugsweise mindestens 0,5 Gew.-%, vorzugsweise mindestens 0,6 Gew.-%, vorzugsweise mindestens 0,7 Gew.-%, vorzugsweise mindestens 0,8 Gew.-%, vorzugsweise mindestens 1 Gew.-%, vorzugsweise mindestens 2 Gew.-%, Siliziumdioxid berechnet als SiO₂ enthält.

Der erfindungsgemäße Tonerdezement kann sich optional dadurch auszeichnen, dass er höchstens 4 Gew.-%, vorzugsweise höchstens 3,8 Gew.%, vorzugsweise höchstens 3,6 Gew.-%, vorzugsweise höchstens 3,4 Gew.-%, vorzugsweise höchstens 3,2 Gew.-%, vorzugsweise höchstens 3 Gew.-%, vorzugsweise höchstens 2,8 Gew.-%, vorzugsweise höchstens 2,6 Gew.-% vorzugsweise höchstens 2,4 Gew.-%, Siliziumdioxid berechnet als SiO₂ enthält.

Der erfindungsgemäße Tonerdezement kann sich optional dadurch auszeichnen, dass mindestens 77 Gew.-% und höchstens 87 Gew.-% CA, enthält, bevorzugt mindestens 79 Gew.-% und höchstens 85 Gew.-% CA, enthält, bevorzugt mindestens 81 Gew.-% und höchstens 83 Gew.-% CA, enthält.

Der erfindungsgemäße Tonerdezement kann sich optional dadurch auszeichnen, dass das Steigungsmaß n im Bereich von 0,8 bis 1,4, vorzugsweise im Bereich von 0,9 bis 1,3, vorzugsweise im Bereich von 1 bis 1,2 liegt.

Der erfindungsgemäße Tonerdezement kann sich optional dadurch auszeichnen, dass er eine Feinheit nach Blaine im Bereich von 3700 bis 5500 cm²/g, vorzugsweise 4000 bis 5200 cm²/g, vorzugsweise 4200 bis 5000 cm²/g, vorzugsweise 4400 bis 4800 cm²/g, aufweist.

Der erfindungsgemäße Tonerdezement kann sich optional dadurch auszeichnen, dass der Lageparameter x' im Bereich von 9 bis 28 µm, vorzugsweise im Bereich von 10 bis 26 µm, vorzugsweise im Bereich von 12 bis 24 µm, vorzugsweise im Bereich von 14 bis 22 µm, vorzugsweise im Bereich von 16 bis 20 µm, liegt.

Der erfindungsgemäße Tonerdezement kann sich optional dadurch auszeichnen, dass er mindestens 0,1 Gew.-% Kohlenstoff enthält, vorzugsweise mindestens 0,5 Gew.-%, vorzugsweise mindestens 1 Gew.-%.

Der erfindungsgemäße Tonerdezement kann sich optional dadurch auszeichnen, dass er andere Elemente oder Oxide in verschiedenen Oxidationsstufen umfasst und ihre verwandten Komponenten Si, Mg, Sr, Ba, Ti, Zr, V, P, Cr, Mn, Zn-Oxide und/oder andere Übergangsmetalle.

Der erfindungsgemäße Tonerdezement kann aus einer entsprechenden Mischung verschiedener aluminium- und kalkhaltiger Einsatzstoffe geschmolzen oder gesintert werden. Dabei können auch Sekundärstoffe geeigneter Zusammensetzung zum Einsatz kommen.

Der Klinker wird nach dem Abkühlen vermahlen. Mahlsystem, -dauer und Energieeintrag werden so gewählt, dass sich die gewünschte Korngrößenverteilung und Mahlfeinheit ergibt. Nötigenfalls kann auch ein Sichten erfolgen. Der abgekühlte, kleinstückig vorliegende Tonerdezementklinker wird gemäß EN 14647, Pkt. 5, in der Regel ohne weitere Zusätze, in geeigneten Mahlanlagen fein gemahlen. Geeignet sind grundsätzlich Kugelmühlen, in denen Mahlkugeln unterschiedlicher Größe in einem rotierenden, zylindrischen Mühlenkörper durch Roll- und Fallbewegungen das Mahlgut zerkleinern. Üblicherweise sind Kugelmühlensysteme mit Massenstromregelungen und sogenannten Windsichtern ausgestattet, die den Anteil des Zementes aus dem Mahlkreislauf abführen, der die Zielfeinheit und die erwünschten Körnungsparameter erreicht hat. Geeignet sind aber auch nach dem Druckzerkleinerungsverfahren arbeitende Gutbett-Walzenmühlen, alleine oder in Kombination mit Kugelmühlensystemen und/oder Vertikal-Wälzmühlen. Es ist auch möglich, die erfindungsgemäßen Körnungsparameter durch Mischen verschiedener Zementchargen gleicher oder verschiedener Mühlensysteme einzustellen.

Der erfindungsgemäße Tonerdezement eignet sich sehr zur Herstellung bauchemischer Produkte, wie z.B. Spachtelmassen, Putze, Fliesenkleber, Reparaturmörtel, Fließmassen, Bodenausgleichsmassen, Spritzmörtel und -betone, Betone für Rohrauskleidungen, aber auch zum Verfestigen problematischer Abfallstoffe und der Demobilisierung von Schadstoffen, sowie zum Einsatz in Entsulfatisierungsverfahren im Rahmen der Abwasseraufbereitung. Bestehende Rezepturen können dafür in wesentlichen Teilen beibehalten werden. Der erfindungsgemäße Tonerdezement bietet in Rezepturen ein gutes Fließmaß. Ihm können im Rahmen von Rezepturen Verflüssiger und Fließmittel zugesetzt werden. Um die hohe hydraulische Reaktivität zu modifizieren können Verzögerer zugesetzt werden.

Die Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gesamtgewicht der Mischung.

Der Eisengehalt der Klinker und Tonerdezemente ist als Fe₂O₃ angegeben.

Die Farbangaben sind Angaben seines Helligkeitswertes nach dem L^{*}a^{*}b^{*} Farbsystem. Den Messungen liegt das als "CIELab" bekannte L^{*}a^{*}b^{*} Farbsystem der internationalen Beleuchtungskommission CIE (Commission Internationale de l'Eclairage) von 1976 zugrunde. In diesem Farbsystem benennen die Messwerte Farborte auf 3 Raumkoordinaten. Der a* Wert definiert den Farbort auf der a - Achse mit den Gegenfarben Grün und Rot. Negative Werte stehen für Grün, positive Werte für Rot. Der b* Wert definiert einen Farb-Ort auf der b - Achse zwischen den Gegenfarben Blau und Gelb. Negative Werte stehen für Blau, positive Werte für Gelb. Der Zahlenbereich für a* und b* liegt jeweils zwischen -100 und +100. Der L^{*} Wert beschreibt die farbunabhängige Helligkeit (Luminanz) des Materials. Die L - Achse steht senkrecht zu den a- und b- Achsen und besitzt die "Gegengrautöne" Schwarz (L* = 0) und Weiß (L* = 100).

Die in EN 14647 festgelegten Anforderungen an Tonerdezemente beruhen auf Ergebnissen von Zementprüfungen nach EN 196-1 (Bestimmung der Festigkeit), 196-2 (Chemische Analyse), 196-3 (Bestimmung der Erstarrungszeiten und der Raumbeständigkeit), 196-5 (Prüfung der Puzzolanität von Puzzolanzementen), 196-6 (Bestimmung der Mahlfeinheit) und 196-7 (Verfahren für die Probenahme und Probenauswahl). Im Folgenden werden einige Prüfergebnisse unter Bezug auf den jeweils relevanten Teil der EN 196 angegeben.

### Beispiel 1

Zur Herstellung des erfindungsgemäßen Tonerdezementes wurden in einem Laborofen verschiedene Rohmaterialmischungen erschmolzen. Die mit den jeweiligen Rohmehlen befüllten Tiegel wurden dazu von Raumtemperatur mit einer Heizrate von 3k/min auf Temperaturen zwischen 1650 °C - 1750°C aufgeheizt und dort für 1h belassen. Anschließend wurde der Ofen ausgeschaltet und dadurch die Tiegel mit der darin enthaltenen Schmelze langsam abgekühlt. In den konkreten Beispielen erfolgte der Abkühlvorgang von einer Ausgangstemperatur von 1700°C mit einer Abkühlrate von 25K/min. Bei 1000°C wurden alle Tiegel aus dem Ofenraum entnommen. Das weitere Abkühlen der Tiegel auf Raumtemperatur erfolgte durch die Umgebungsluft. Die erkalteten Klinker wurden mit geeignetem Werkzeug aus den Tiegeln präpariert und nach einer Lagerdauer von 24 Stunden auf einer Kugelmühle ohne Zugabe von Mahlhilfsmittel gemahlen.

Als Ausgangsstoffe wurden natürlicher Kalkstein, calcinierter weißer Bauxit, roter Bauxit und feinkörnige Tonerde, Al₂O₃ (SO 143, Fa. DADCO) eingesetzt. In Tabelle 2 sind die zur Herstellung der erfindungsgemäßen Klinker verwendeten Ausgangsstoffe und ihre chemischen Zusammensetzungen zusammengestellt.

**Tabelle 2: Chemische Zusammensetzung der Ausgangsstoffe (nach EN 14647 196-2)**

| Ausgangsstoffe | Kalkstein | Bauxit, calc. | Bauxit, rot | Tonerde |
|---|---|---|---|---|
| | [%] | [%] | [%] | [%] |
| G.V. | 43,66 | 0,39 | 13,32 | 3,00 |
| SiO₂ | 0,12 | 5,83 | 1,81 | 0,00 |
| Al₂O₃ | 0,19 | 87,80 | 56,76 | 96,67 |
| TiO₂ | 0,01 | 3,96 | 2,67 | 0,00 |
| MnO | 0,01 | 0,01 | 0,02 | 0,00 |
| Fe₂O₃ | 0,06 | 1,32 | 22,53 | 0,01 |
| CaO | 55,69 | 0,00 | 2,53 | 0,00 |
| MgO | 0,32 | 0,24 | 0,10 | 0,00 |

Unter Verwendung der Rohstoffe aus Tabelle 2 wurden 6 erfindungsgemäße Klinkerproben erschmolzen. Die mineralogische Zusammensetzung dieser Klinker KCAC 1 - 6 findet sich in Tabelle 3. Diesen Werten sind Stichprobenanalysen der handelsüblichen Tonerdezemente Istra 50, HiPerCem, Secar 71 und Gorkal 70 gegenübergestellt. Alle Phasengehalte wurden mit der Rietveldsoftware HighScore Plus, Version 4.6a der Firma PANalytical B.V., Almelo, Niederlande, bestimmt. Zur Analyse wurde ein Panalytical Cubix Röntgendiffraktometer mit schnellem XCelerator Detektor verwendet.

**Tabelle 3: Mineralogische Zusammensetzung der Klinker KCAC 1 - 6 und 4 handelsüblicher Tonerdezemente**

| | KCAC1 | KCAC2 | KCAC3 | KCAC4 | KCAC5 | KCAC6 | Istra 50 | HiPerCem | Secar 71 | Gorkal 70 |
|---|---|---|---|---|---|---|---|---|---|---|
| | [%] | [%] | [%] | [%] | [%] | [%] | [%] | [%] | [%] | [%] |
| CA | 88,7 | 81,1 | 75,1 | 88,9 | 82,6 | 75,8 | 63,4 | 94,3 | 59,6 | 72,7 |
| C₄AF | 0,2 | 1,1 | 1,3 | 2,1 | 4,9 | 7,8 | 1,3 | - | - | - |
| C₁₂A₇ | 1,7 | 1,8 | 1,8 | 1,8 | 2,1 | 2,4 | 2,1 | 0,9 | 0,4 | 0,3 |
| C₂AS | 2,4 | 6,9 | 10,9 | 1,0 | 2,5 | 3,9 | 16,2 | - | - | - |
| Pleochroit | 1,2 | 2,6 | 3,5 | 0,6 | 1,5 | 2,4 | 6,4 | - | - | - |
| C₂S | 1,8 | 2,4 | 3,5 | 1,0 | 1,7 | 2,6 | 5,6 | - | - | - |
| CT, C₃FT | 0,5 | 1,3 | 1,9 | 0,5 | 1,2 | 1,8 | 3,1 | - | - | - |
| Mg(Al,Fe)₂O₄ | 0,1 | 0,6 | 0,4 | 0,5 | 0,7 | 1,2 | 1,9 | - | - | - |
| CA₂ | 3,4 | 2,2 | 1,6 | 3,6 | 2,8 | 2,1 | - | 4,6 | 39,5 | 26,2 |
| A | - | - | - | - | - | - | - | 0,2 | 0,5 | 0,8 |

In Tabelle 4 ist die chemische Zusammensetzung der 6 Klinkerproben KCAC 1 - 6 in Gew.-% glühverlustfreies Material, sowie die prozentuale Zusammensetzung der jeweiligen Rohmischung, ebenfalls in Gew.-% glühverlustfreies Material, unter Verwendung der Rohmaterialkomponenten. Tabelle 2 zusammengestellt. Dem gegenübergestellt sind die Stichprobenanalysen der handelsüblichen Tonerdezemente Istra 50, HiPerCem, Secar 71 und Gorkal 70.

**Tabelle 4: Chemische Analysen der Klinker KCAC 1 - 6, ihrer Rohmischungen und 4 handelsüblicher Tonerdezemente (glühverlustfreie Analysendaten)**

| Klinker | KCAC 1 | KCAC 2 | KCAC 3 | KCAC 4 | KCAC 5 | KCAC 6 | Istra 50 | HiPerCe m | Seca r 71 | Gork al 70 |
|---|---|---|---|---|---|---|---|---|---|---|
| | [%] | [%] | [%] | [%] | [%] | [%] | [%] | [%] | [%] | [%] |
| SiO₂ | 0,70 | 1,57 | 2,43 | 0,24 | 0,48 | 0,71 | 5,34 | 0,24 | 0,27 | 0,28 |
| Al₂O₃ | 62,63 | 59,65 | 56,48 | 61,92 | 57,69 | 53,56 | 50,8 6 | 64,15 | 69,2 5 | 70,19 |
| TiO₂ | 0,43 | 1,02 | 1,60 | 0,26 | 0,60 | 0,94 | 2,32 | 0,00 | 0,00 | 0,00 |
| MnO | 0,01 | 0,01 | 0,01 | 0,01 | 0,01 | 0,01 | 0,02 | 0,01 | 0,02 | 0,01 |
| Fe₂O₃ | 0,19 | 0,38 | 0,58 | 2,15 | 5,04 | 7,92 | 2,27 | 0,06 | 0,08 | 0,09 |
| CaO | 35,70 | 36,88 | 38,26 | 35,15 | 35,87 | 36,49 | 38,3 8 | 34,32 | 29,7 2 | 28,77 |
| MgO | 0,23 | 0,27 | 0,32 | 0,21 | 0,23 | 0,24 | 0,48 | 0,42 | 0,20 | 0,21 |
| A/C Wert | 1,75 | 1,62 | 1,48 | 1,76 | 1,61 | 1,47 | 1,33 | 1,87 | 2,33 | 2,44 |

| Rohstoffe | | | | | | | | | | |
|---|---|---|---|---|---|---|---|---|---|---|
| | [%] | [%] | [%] | [%] | [%] | [%] | | | | |
| Kalkstein | 36,20 | 37,40 | 38,80 | 35,40 | 35,80 | 36,10 | | | | |
| Bauxit, kalziniert | 10,70 | 25,50 | 40,20 | - | - | - | | | | |
| Bauxit, rot | - | - | - | 8,10 | 19,20 | 30,30 | | | | |
| Tonerde | 53,10 | 37,10 | 21,00 | 56,50 | 45,00 | 33,60 | | | | |

Die erfindungsgemäßen Klinkerproben wurden auf Mahlfeinheiten zwischen 3800 und 4400 cm²/g n. Blaine vermahlen. KCAC1 und KCAC3 sind mit Fe₂O₃ Gehalten von 0,19 und 0,58 % eisenarme Ausführungen mit dem höchsten Gehalt an Monocalciumaluminat CA von 88,7% (KCAC1) und dem niedrigsten Gehalt von 75,1% (KCAC3). KCAC4 und KCAC6 weisen mit 88,9% und 75,8% den höchsten und niedrigsten Gehalt an Monocalciumaluminat CA für die eisenreichere Ausführung des erfindungsgemäßen Tonerdezementes mit Fe₂O₃ Gehalten von 2,15% (KCAC4) und 7,92% (KCAC6) auf.

In der Tabelle 5 sind für diese Tonerdezemente die Ergebnisse der Bestimmungen der Mahlfeinheit nach Blaine, der Körnungsparameter x' und n im RRSB Körnungsnetz nach DIN 66145, sowie dem Helligkeitswert L, bestimmt nach dem L^{*}a^{*}b^{*} System, zusammengestellt. Zusätzlich sind die Prüfergebnisse für 4 vergleichbare, handelsübliche Tonerdezemente dargestellt (Istra 50, HiPerCem, Secar 71, Gorkal 70).

Die Bestimmung der Körnungsparameter x' und n erfolgten mit einem Lasergranulometer HELOS mit RODOS T4.1 der Fa. Sympatec GmbH. Die Messungen der Helligkeitswerte erfolgten unter Verwendung eines Konica Minolta Chroma Meter CR-400, auf der Oberfläche von verdichteten, geglätteten und rissfreien Pulverpräparaten als Doppelbestimmung.

**Tabelle 5: Blaine-Werte, Körnungs- und Farbparameter der Zemente CAC 1 - 6 und 4 handelsüblicher Tonerdezemente**

| Tonerdezement | Blaine [cm2/g] | x' [µm] | n | Helligkeitswert L |
|---|---|---|---|---|
| | | | | [L*a*b* System] |
| CAC 1 | 4320 | 16,1 | 1,03 | 84,3 |
| CAC 2 | 4030 | 19,8 | 0,98 | 81,4 |
| CAC 3 | 3810 | 22,6 | 0,94 | 79,9 |
| CAC 4 | 4360 | 14,9 | 1,02 | 73,2 |
| CAC 5 | 4204 | 17,3 | 0,99 | 65,8 |
| CAC 6 | 4010 | 19,5 | 0,95 | 60,1 |
| Istra 50 | 3370 | 28,2 | 0,87 | 68,0 |
| HiPerCem | 4530 | 13,5 | 1,20 | 93,1 |
| Secar 71 | 4130 | 26,8 | 0,81 | 92,5 |
| Gorkal 70 | 4470 | 22,6 | 0,95 | 91,6 |

Aus Tabelle 5 zeigt die Feinheiten nach Blaine der erfindungsgemäßen Tonerdezemente CAC 1 bis CAC 6 sowie die entsprechenden Parameter für Istra 50, Secar 71, Gorkal 70 und HiPerCem. Die Helligkeitswerte, ausgedrückt als L^{*} im CIE L*a*b*-System, liegen unter denen der aufwändiger hergestellten Tonerdezementen Secar 71, Gorkal 70 und HiPerCem.

Für die erfindungsgemäßen Zementen sowie die Vergleichsproben Istra 50, Secar 71, Gorkal 70 und HiPerCem wurden nach EN 14647 der Wasseranspruch zum Erreichen der Normsteife, die Erstarrungszeiten an Leim und Mörtel, sowie die Druckfestigkeitsentwicklung an Normmörtel im Zeitbereich 6 bis 24 Stunden bestimmt. Entsprechend den Vorschriften der EN 14647 wird zur Bestimmung der Normsteife und des dafür erforderlichen Wasseranspruchs das Prüfverfahren der EN 196-3 angewandt. Die Bestimmung der Druckfestigkeit nach EN 14647 erfolgt an einem Normmörtel, der bei einem Normensandgehalt von 1350 g, 500 g Tonerdezement und 250 g Wasser enthält. Die Bestimmung der Erstarrungszeiten am Mörtel wurde analog zum Verfahren nach EN 196-3 an diesem Normmörtel durchgeführt. Die Ergebnisse der Prüfungen des Wasseranspruchs und des Erstarrungsverhaltens an Leim und Mörtel sind in Tabelle 6 dargestellt, die Ergebnisse der Druckfestigkeitsprüfungen in Tabelle 7. Die Tabellen 6 und 7 zeigen auch die Prüfergebnisse für die 4 vergleichbaren, handelsüblichen Tonerdezemente Istra 50, HiPerCem, Secar 71, Gorkal 70.

**Tabelle 6: Blaine-Werte, Erstarren an Leim und Mörtel der Zemente CAC 1 - 6 und 4 handelsüblicher Tonerdezemente**

| | Blaine-Wert | Wasseranspruch | Erstarren Leim | | Erstarren Mörtel | |
|---|---|---|---|---|---|---|
| | | | [h:min] | | [h:min] | |
| | [cm²/g] | [%] | Beginn | Ende | Beginn | Ende |
| CAC 1 | 4320 | 35,6 | 6:08 | 6:23 | 3:40 | 4:10 |
| CAC 2 | 4030 | 31,6 | 4:15 | 4:55 | 3:35 | 4:00 |
| CAC 3 | 3810 | 31,0 | 4:10 | 4:15 | 3:25 | 3:53 |
| CAC 4 | 4360 | 35,2 | 4:40 | 5:20 | 3:35 | 4:00 |
| CAC 5 | 4204 | 32,2 | 4:30 | 5:10 | 3:20 | 3:40 |
| CAC 6 | 4010 | 31,0 | 4:20 | 5:05 | 3:00 | 3:15 |
| Istra 50 | 3370 | 25,3 | 4:10 | 4:25 | 3:10 | 3:40 |
| HiPerCem | 4530 | 34,0 | 6:08 | 6:28 | 3:50 | 4:15 |
| Secar 71 | 4130 | 27,0 | 5:40 | 6:15 | 3:00 | 3:20 |
| Gorkal 70 | 4470 | 30,0 | 5:10 | 5:20 | 2:40 | 2:50 |

**Tabelle 7: Blaine-Werte, Druckfestigkeiten bis 24h der Zemente CAC 1 - 6 und 4 handelsüblicher Tonerdezemente**

| Zement | Blaine [cm²/g] | Druckfestigkeit [MPa] | | | | | | |
|---|---|---|---|---|---|---|---|---|
| | | 6h | 8h | 10h | 14h | 16h | 18h | 24h |
| CAC 1 | 4320 | 30,2 | 48,8 | 54,3 | 55,3 | 56,5 | 58,0 | 66,1 |
| CAC 2 | 4030 | 36,1 | 51,6 | 54,0 | 56,5 | 57,4 | 60,0 | 66,9 |
| CAC 3 | 3810 | 27,6 | 49,4 | 60,5 | 64,3 | 64,5 | 65,1 | 67,3 |
| CAC 4 | 4360 | 26,9 | 49,5 | 52,6 | 53,5 | 54,2 | 57,0 | 68,3 |
| CAC 5 | 4204 | 41,6 | 53,1 | 56,4 | 58,5 | 60,6 | 63,3 | 66,4 |
| CAC 6 | 4010 | 43,5 | 55,5 | 58,8 | 60,5 | 61,0 | 63,5 | 66,5 |
| Istra 50 | 3370 | 20,8 | 50,8 | 60,0 | 71,7 | 72,1 | 72,7 | 74,9 |
| HiPerCem | 4530 | 52,4 | 57,4 | 60,7 | 63,5 | 63,6 | 64,2 | 64,4 |
| Secar 71 | 4130 | 29,9 | 42,0 | 46,2 | 49,2 | 50,2 | 52,2 | 55,4 |
| Gorkal 70 | 4470 | 38,8 | 43,8 | 47,1 | 48,7 | 49,4 | 51,1 | 50,6 |

Aus der Tabelle 6 wird deutlich, dass die erfindungsgemäßen Zemente CAC 1 bis CAC 6 gleich gute Verarbeitungseigenschaften aufweisen, wie handelsübliche Tonerdezemente.

Die Tabelle 7 zeigt, dass die erfindungsgemäßen Zemente CAC 1 - CAC 6 im Normmörtel eine deutlich höhere Frühfestigkeit bis 8h nach dem Anmachen aufweisen, als die vergleichbaren hochwertigen weißen Tonerdezemente Secar 71 und auch Gorkal 70. Nach 24h ist das Festigkeitsniveau der Zemente CAC 1 bis CAC 6 deutlich höher als das der handelsüblichen Zemente Gorkal 70, Secar 71 und HiPerCem.

### Beispiel 2

In einem großtechnischen Werksversuch wurden 3 erfindungsgemäße Klinker und daraus resultierende Zemente hergestellt. Die Herstellung der Klinker erfolgte in einem L-förmigen Schachtofen mit geeigneter feuerfester Auskleidung, wie sie in der Tonerdezementindustrie üblich ist. Die Befeuerung des Ofens erfolgte mit Kohle. Die Schmelztemperaturen lagen zwischen 1.650°C und 1.750°C. Als Rohmaterialien wurde Kalkstein, Tonerde in Form von hydraulisch- bzw. zementgebundenen Briketts und roter Bauxit in geeigneten Verhältnissen eingesetzt. Die chemische Zusammensetzung des Kalksteins, des roten Bauxits und der Tonerde entsprachen dabei der Tabelle 2. Es wurden insgesamt 32t Klinker produziert und anschließend die drei erfindungsgemäßen Klinker in einer Kugelmühle vermahlen.

Die Tabelle 8 zeigt den Phasenbestand der drei großtechnisch hergestellten, erfindungsgemäßen Klinker PKCAC 1, PKCAC 2 und PKCAC 3. In Tabelle 9 ist ihre chemische Zusammensetzung wiedergegeben.

**Tabelle 8: Mineralogische Zusammensetzung der Klinker PKCAC 1 - 3**

| | PKCAC1 | PKCAC2 | PKCAC3 |
|---|---|---|---|
| CA | 88,3 | 87,0 | 86,7 |
| C₄AF | 0,4 | 0,3 | 0,3 |
| C₁₂A₇ | 2,3 | 2,8 | 2,8 |
| C₂AS | 1,3 | 2,0 | 2,3 |
| Pleochroite | 3,1 | 3,2 | 3,3 |
| C₂S | 0,5 | 0,0 | 0,7 |
| CT, C₃FT | 1,3 | 1,5 | 1,4 |
| Mg(Al,Fe)₂O₄ | 2,3 | 2,7 | 1,9 |
| CA₂ | 0,5 | 0,5 | 0,6 |

**Tabelle 9: Chemische Zusammensetzung der Klinker PKCAC 1 - 3**

| | PKCAC1 | PKCAC2 | PKCAC3 |
|---|---|---|---|
| | [%] | [%] | [%] |
| SiO2 | 0,78 | 0,64 | 0,66 |
| Al2O3 | 58,59 | 59,63 | 60,20 |
| TiO2 | 0,73 | 0,63 | 0,63 |
| MnO | 0,03 | 0,03 | 0,03 |
| Fe2O3 | 5,83 | 5,16 | 5,14 |
| CaO | 33,05 | 33,21 | 33,12 |
| MgO | 0,69 | 0,68 | 0,69 |
| A/C Wert | 1,77 | 1,80 | 1,82 |

Für die aus den Klinkern PKCAC 1, PKCAC 2 und PKCAC 3 ermahlenen erfindungsgemäßen Zemente PCAC 1, PCAC2 und PCAC3 und die handelsüblichen Vergleichszemente sind in Tabelle 10 die Mahlfeinheiten n. Blaine, die Kornverteilung und die Helligkeitswerte L* zusammengestellt. Tabelle 11 enthält die nach EN 193 ermittelten Werte für den Wasseranspruch und das Erstarren an Leim und Mörtel. Tabelle 12 enthält die detaillierten Daten der Frühfestigkeits-Entwicklung im Zeitbereich zwischen 6 und 24 Stunden. Die Festigkeitsentwicklung ist in Tabelle 12 wiedergegeben.

**Tabelle 10: Blaine-Werte, Kornverteilung und L*-Werte der Zemente PCAC 1 - 3 und 4 handelsüblicher Vergleichszemente**

| Tonerdezement | Blaine [cm²/g] | x' [µm] | n | Helligkeitswert L |
|---|---|---|---|---|
| | | | | [L*a*b* System] |
| PCAC1 | 5900 | 9,4 | 0,78 | 63,1 |
| PCAC2 | 4200 | 21,3 | 0,76 | 64,3 |
| PCAC3 | 3340 | 29,0 | 0,79 | 61,2 |
| Istra 50 | 3370 | 28,2 | 0,87 | 68,0 |
| HiPerCem | 4530 | 13,5 | 1,20 | 93,1 |
| Secar 71 | 4130 | 26,8 | 0,81 | 92,5 |
| Gorkal 70 | 4470 | 22,6 | 0,95 | 91,6 |

**Tabelle 11: Blaine-Werte, Erstarren an Leim und Mörtel der Zemente PCAC 1 - 3 und 4 handelsüblicher Tonerdezemente**

| | Blaine-Wert [cm²/g] | Wasser [%] | Erstarren Leim [h:min] | | Erstarren Mörtel [h:min] | |
|---|---|---|---|---|---|---|
| | | | Beginn | Ende | Beginn | Ende |
| PCAC1 | 5900 | 24,0 | 5:30 | 6:30 | 1:40 | 2:08 |
| PCAC2 | 4200 | 23,6 | 5:10 | 5:40 | 1:45 | 2:15 |
| PCAC3 | 3340 | 23,0 | 5:00 | 5:30 | 1:52 | 2:21 |
| Istra 50 | 3370 | 25,3 | 4:10 | 4:25 | 3:10 | 3:40 |
| HiPerCem | 4530 | 34,0 | 6:08 | 6:28 | 3:50 | 4:15 |
| Secar 71 | 4130 | 27,0 | 5:40 | 6:15 | 3:00 | 3:20 |
| Gorkal 70 | 4470 | 30,0 | 5:10 | 5:20 | 2:40 | 2:50 |

**Tabelle 12: Blaine-Werte, Druckfestigkeiten bis 24h der Zemente PCAC 1 - 3 und 4 handelsüblicher Tonerdezemente**

| Zement | Blaine [cm²/g] | Druckfestigkeit [MPa] | | | | | | |
|---|---|---|---|---|---|---|---|---|
| | | 6h | 8h | 10h | 14h | 16h | 18h | 24h |
| PCAC 1 | 5900 | 23,9 | 65,8 | 68,2 | nb | nb | 82,1 | 86,4 |
| PCAC 2 | 4200 | 18,6 | 52,8 | 72,9 | nb | nb | 80,6 | 84,1 |
| PCAC 3 | 3340 | 19,1 | 64,2 | 73,0 | nb | nb | nb | 82,2 |
| Istra 50 | 3370 | 20,8 | 50,8 | 60,0 | 71,7 | 72,1 | 72,7 | 74,9 |
| HiPerCem | 4530 | 52,4 | 57,4 | 60,7 | 63,5 | 63,6 | 64,2 | 64,4 |
| Secar 71 | 4130 | 29,9 | 42,0 | 46,2 | 49,2 | 50,2 | 52,2 | 55,4 |
| Gorkal 70 | 4470 | 38,8 | 43,8 | 47,1 | 48,7 | 49,4 | 51,1 | 50,6 |

| | | | | | | | | |
|---|---|---|---|---|---|---|---|---|
| nb: nicht bestimmt | | | | | | | | |

Aus Tabelle 12 wird ersichtlich, dass die erfindungsgemäßen Tonerdezemente PCAC 1, PCAC 2 und PCAC 3 vergleichbare 6h Druckfestigkeit aufweisen können, wie handelsübliche Vergleichsprodukte. Die erfindungsgemäßen Tonerdezemente erzielen jedoch bereits nach 8h deutlich höhere Festigkeit als handelsübliche Tonerdezemente. Die Festigkeit nach 24h der erfindungsgemäßen Tonerdezemente PCAC 1, PCAC 2 und PCAC 3 ist deutlich höher als die der handelsüblichen weißen und aufwändiger herzustellenden Tonerdezemente (Secar 71, Gorkal 70, HiPerCem) und auch höher als die von Istra 50.

### Beispiel 3

Mit dem erfindungsgemäßen Tonerdezement wurden unterschiedliche bauchemische Mischungen als selbstverlaufende Spachtelmasse hergestellt, unter Verwendung branchenüblicher Bindemittelbestandteile, Additive und Füllstoffe, wie sie für Produkte im Bereich Fliesenkleber, Ausgleichsmassen, Spachtelmassen und Reparaturmörtel typisch sind. Unter den bauchemischen Rezepturen ist die selbstverlaufende Spachtelmasse ein besonders anspruchsvolles Produkt. Einerseits sollen diese Rezepturen einen guten bis sehr guten Verlauf über die Verarbeitungszeit von 30 min besitzen, andererseits müssen sie eine hohe Frühfestigkeit und schnelle Begehbarkeit gewährleisten. In der Regel weisen die qualitativ hochwertigen selbstverlaufenden Spachtelmassen einen hohen Tonerdezementgehalt auf.

Die Zusammensetzung der verschiedenen Rezepturen ist in der Tabelle 13 vollständig wiedergegeben. Die Rezepturbestandteile werden dabei unterteilt in "Bindemittel", "Additive I und II" und "Füllstoffe". Jede der Grundrezepturen wurde mit drei erfindungsgemäßen Tonderdezementen ausgeführt: Den erfindungsgemäßen Tonerdezementen PCAC1, PCAC2, PCAC3, den handelsüblichen Vergleichszementen Secar 71 (Fa. Kerneos), Gorkal 70 (Fa. Gorka) und dem Vergleichszement Istra 50 (Fa. Calucem).

Die sieben Mischungen wurden jeweils mit gleichen Bindemittelgehalten hergestellt und über einen Zeitraum von 30 Minuten nach ihrer Herstellung durch das Messen der Ausbreitmaße a5, a15 und a30 auf ihre Konsistenz, sowie an Normenprismen 4 cm x 4 cm x16 cm auf ihre Druckfestigkeitsentwicklung nach 4 h, 6 h und 24 h geprüft. Im Folgenden werden die in der Tabelle 13 verwendeten Begriffe und Abkürzungen erläutert.

Unter "Bindemittel" werden die Rezepturanteile: Portlandzement (OPC) Dyckerhoff Weiß Speed CEM I 42,5 R, Fa. Dyckerhoff, Tonerdezement (CAC) und Calciumsulfat (HH) Alpha - Halbhydrat Special 40 W, Fa. Casea verstanden.

Als "Additive I" sind die Zusätze mit primär verzögernder und beschleunigender Wirkung bezeichnet: Weinsäure L(+) p.a. (WS), Fa. HARKE Chemicals GmbH; Natriumcarbonat wfr. p.a. (NaC), Fa Neolab Art.-Nr. 4750; und Lithiumcarbonat rein. (LiC), Fa Merck Art.-Nr. 5670.

"Additive II" sind diejenigen Zusätze, die primär Einfluss auf die Konsistenz der Mischung ausüben: Kalkhydrat (CH), Fa. Otterbein Art.-Nr. WKH II CL 90; Verflüssiger ViscoCrete-225 P (VF), Fa SIKA; Celluloseether Culminal MHPC-500 PF (CE), Fa. Ashland; und Entschäumer Agitan P 801 (ES), Fa. Münzing Chemie GmbH, Redispergierbares Polymer Pulver (RPP) ELOTEX FL 2280, Fa. Akzo Nobel Chemicals AG.

Als Füllstoffe (F) sind inerte, nicht an den hydraulischen Reaktionen beteiligte Materialien bezeichnet. In den Beispielen wurden Quarzsand F34 (F1), Fa. Quarzwerke GmbH und Kalksteinmehl 40GU (F2), Fa. Omya GmbH eingesetzt.

In der Tabelle 13 angegebene Prozentwerte beziehen sich auf den prozentualen Anteil einer Komponente am Gesamtgewicht der Mischung.

Alle bauchemischen Mischungen wurden mit einem konstanten Wasser/Feststoffwert (W/F-Wert) von 0,21 angemacht.

Innerhalb einer Rezeptur mit gegebenem Bindemittelanteil wurde außer der Variation des Tonerdezementes keine wesentliche Änderung vorgenommen.

Die Prüfung des Ausbreitmaßes erfolgte in der Weise, dass jeweils 2000 g der trockenen Rezepturmischung exakt eingewogen und in einem Mörtelmischer nach EN 196 mit 420 g entmineralisiertem Wasser 30 Sekunden auf Stufe I und danach 90 Sekunden auf Stufe II angemischt wurden. Das Anmachwasser wurde dazu im Mischertrog vorgelegt und anschließend die Trockenmischung zugegeben. Die erhaltene gießfähige Mischung wurde sofort auf 3 Auslaufringe, d.h. ringförmige Aluminiumgefäße von 35 mm Höhe und einem inneren Durchmesser von 68 mm, verteilt, die zentriert auf 3 mit konzentrischen Graduierungen versehenen, trockenen Ausbreitplatten aus Plexiglas angeordnet waren. 5 Minuten nach Mischbeginn, wurde der erste Ring angehoben und der Durchmesser der kreisförmig verlaufenen Masse als Mittelwert aus zwei senkrecht zueinander stehenden Messungen mit dem Messschieber, als a5 Wert ermittelt. In gleicher Weise wurde nach 15 und 30 Minuten mit den beiden anderen Ringen verfahren und die Werte a15 und a30 ermittelt.

Zur Ermittlung der Druckfestigkeit nach 4, 6 und 24 h wurden die bauchemischen Mischungen in gleicher Weise hergestellt und die gießfähigen Materialien nach Mischende ohne zusätzliche Verdichtungsmaßnahmen in Prismenformen nach EN 196 eingefüllt. Die Formen wurden entsprechend EN 196 gelagert und die Prismen normgemäß zu den vorgesehenen Terminen geprüft.

In der Tabelle 13 sind die erfindungsgemäßen Tonerdezement PCAC 1, PCAC 2 und PCAC 3 einem Istra 50, HiPerCem, Secar 71 und Gorkal 70 in einer Spachtelmasse gegenübergestellt. Die Rezeptur wurde mit einem konstanten Bindemittelgehalt von 29,15 % ausgeführt.

Tabelle 13: Spachtelmassen mit den drei erfindungsgemäßen Tonerdezementen PCAC 1 - 3 und den handelsüblichen Vergleichszementen Istra 50, HiPerCem, Secar 71 und Gorkal 70

| Tonerdezement | PCAC1 | PCAC2 | PCAC3 | Istra 50 | HiPerCem | Secar 71 | Gorkal 70 |
|---|---|---|---|---|---|---|---|
| Rezeptur | | | | | | | |
| OPC [%] | 5,93 | 5,93 | 5,93 | 5,93 | 5,93 | 5,93 | 5,93 |
| CAC [%] | 14,48 | 14,48 | 14,48 | 14,48 | 14,48 | 14,48 | 14,48 |
| HH [%] | 8,74 | 8,74 | 8,74 | 8,74 | 8,74 | 8,74 | 8,74 |
| Summe Bindemittel | 29,15 | 29,15 | 29,15 | 29,15 | 29,15 | 29,15 | 29,15 |

| Additive I | | | | | | | |
|---|---|---|---|---|---|---|---|
| WS [%] | 0,14 | 0,14 | 0,14 | 0,14 | 0,14 | 0,14 | 0,14 |
| NaC [%] | 0,33 | 0,33 | 0,33 | 0,33 | 0,33 | 0,33 | 0,33 |
| LiC [%] | 0,03 | 0,03 | 0,03 | 0,03 | 0,03 | 0,03 | 0,03 |

| Additive II | | | | | | | |
|---|---|---|---|---|---|---|---|
| CH [%] | 0,87 | 0,87 | 0,87 | 0,87 | 0,87 | 0,87 | 0,87 |
| VF [%] | 0,29 | 0,29 | 0,29 | 0,29 | 0,29 | 0,29 | 0,29 |
| CE [%] | 0,07 | 0,07 | 0,07 | 0,07 | 0,07 | 0,07 | 0,07 |
| ES [%] | 0,14 | 0,14 | 0,14 | 0,14 | 0,14 | 0,14 | 0,14 |
| RPP [%] | 0,97 | 0,97 | 0,97 | 0,97 | 0,97 | 0,97 | 0,97 |

| Füllstoffe | | | | | | | |
|---|---|---|---|---|---|---|---|
| F1 [%] | 44,21 | 44,21 | 44,21 | 44,21 | 44,21 | 44,21 | 44,21 |
| F2 [%] | 23,80 | 23,80 | 23,80 | 23,80 | 23,80 | 23,80 | 23,80 |
| W/F - Wert | 0,21 | 0,21 | 0,21 | 0,21 | 0,21 | 0,21 | 0,21 |

| Ausbreitmaß | | | | | | | |
|---|---|---|---|---|---|---|---|
| a5 [mm] | 210 | 220 | 232 | 215 | 221 | 220 | 225 |
| a15 [mm] | 222 | 231 | 220 | 222 | 236 | 232 | 226 |
| a30 [mm] | 220 | 228 | 190 | 235 | 238 | 235 | 143 |

| Druckfestigkeit | | | | | | | |
|---|---|---|---|---|---|---|---|
| 4 h [MPa] | 2 | 6 | 22 | 2 | 28 | 2 | 2 |
| 6 h [MPa] | 19 | 23 | 25 | 2 | 30 | 2 | 3 |
| 24 h [MPa] | 28 | 32 | 33 | 24 | 37 | 27 | 24 |

Die gefundenen Ausbreitmaße zeigen die vergleichbar gute Fließfähigkeit und die erheblich stärkere Frühfestigkeitsentwicklung bis 24h bei Verwendung des erfindungsgemäßen Tonerdezementes im Vergleich zu den handelsüblichen Vergleichszementen.

Überraschenderweise zeigt der erfindungsgemäße Tonerdezement in seinen Ausführungsformen, insbesondere in seiner eisenarmen Ausführung, noch unerwartet gute feuerfeste Eigenschaften bezüglich der Kaltdruckfestigkeit und Längenänderung nach Brand in Feuerbetonversätzen.

## Patentansprüche

1. Tonerdezement, **dadurch gekennzeichnet, dass** er mindestens 75 Gew.-% und höchstens 89 Gew.-% Monocalciumaluminat, CA in kristalliner oder amorpher Form oder als Mischung aus kristallinen und armorphen Anteilen, enthält, wobei er wenigstens 53 Gew.-% Aluminiumoxid berechnet als Al₂O₃ enthält und einen A/C-Wert basierend auf Gew% im Bereich von 1,45 bis 1,85 aufweist, wobei er höchstens 39 Gew.-% Calciumoxid enthält, wobei er eine Mahlfeinheit nach Blaine im Bereich von 3500 bis 6000 cm²/g aufweist, wobei er ein Steigungsmaß n im Bereich von 0,7 bis 1,5 aufweist und einen Lageparameter x' von 8 - 30 µm in einem RRSB Körnungsnetz nach DIN 66145 aufweist und seine Farbe im L*a*b* Farbsystem im Wertebereich: L* < 85, bevorzugt < 80, liegt.

2. Tonerdezement nach Anspruch 1, **dadurch gekennzeichnet, dass** er mindestens 0,1 Gew.-%, vorzugsweise mindestens 0,15 Gew.-%, vorzugsweise mindestens 0,5 Gew.-%, vorzugsweise mindestens 1 Gew.%, vorzugsweise mindestens 1,5 Gew.-%, vorzugsweise mindestens 2 Gew.-%, vorzugsweise mindestens 2,5 Gew.-%, vorzugsweise mindestens 3 Gew.-%, vorzugsweise mindestens 3,5 Gew.-%, vorzugsweise mindestens 4 Gew.-%, Eisen berechnet als Fe₂O₃ enthält.

3. Tonerdezement nach einem der voranstehenden Ansprüche, **dadurch gekennzeichnet, dass** er höchstens 10 Gew.-%, vorzugsweise höchstens 9 Gew.-%, vorzugsweise höchstens 8 Gew.-%, vorzugsweise höchstens 7,5 Gew.-%, vorzugsweise höchstens 7 Gew.-%, vorzugsweise höchstens 6,5 Gew.-%, vorzugsweise höchstens 6 Gew.-%, vorzugsweise höchstens 5,5 Gew.-% vorzugsweise höchstens 5 Gew.-%, Eisen berechnet als Fe₂O₃ enthält.

4. Tonerdezement nach einem der voranstehenden Ansprüche, **dadurch gekennzeichnet, dass** er mindestens 0,2 Gew.-%, vorzugsweise mindestens 0,3 Gew.-%, vorzugsweise mindestens 0,4 Gew.-%, vorzugsweise mindestens 1 Gew.-%, vorzugsweise mindestens 0,5 Gew.%, vorzugsweise mindestens 0,6 Gew.-%, vorzugsweise mindestens 0,7 Gew.-%, vorzugsweise mindestens 0,8 Gew.-%, vorzugsweise mindestens 1 Gew.-%, vorzugsweise mindestens 2 Gew.-%, Siliziumdioxid berechnet als SiO₂ enthält.

5. Tonerdezement nach einem der voranstehenden Ansprüche, **dadurch gekennzeichnet, dass** er höchstens 4 Gew.-%, vorzugsweise höchstens 3,8 Gew.-%, vorzugsweise höchstens 3,6 Gew.-%, vorzugsweise höchstens 3,4 Gew.-%, vorzugsweise höchstens 3,2 Gew.-%, vorzugsweise höchstens 3 Gew.-%, vorzugsweise höchstens 2,8 Gew.-%, vorzugsweise höchstens 2,6 Gew.-% vorzugsweise höchstens 2,4 Gew.%, Siliziumdioxid berechnet als SiO₂ enthält.

6. Tonerdezement nach einem der vorangegangenen Ansprüche, **dadurch gekennzeichnet, dass** mindestens 77 Gew.-% und höchstens 87 Gew.-% CA, enthält, bevorzugt mindestens 79 Gew.-% und höchstens 85 Gew.-% CA, enthält, bevorzugt mindestens 81 Gew.-% und höchstens 83 Gew.-% CA, enthält.

7. Tonerdezement nach einem der vorangegangenen Ansprüche, **dadurch gekennzeichnet, dass** das Steigungsmaß n im Bereich von 0,8 bis 1,4, vorzugsweise im Bereich von 0,9 bis 1,3, vorzugsweise im Bereich von 1 bis 1,2 liegt.

8. Tonerdezement nach einem der vorangegangenen Ansprüche, **dadurch gekennzeichnet, dass** er eine Feinheit nach Blaine im Bereich von 3700 bis 5500 cm²/g, vorzugsweise 4000 bis 5200 cm²/g, vorzugsweise 4200 bis 5000 cm²/g, vorzugsweise 4400 bis 4800 cm²/g, aufweist.

9. Tonerdezement nach einem der vorangegangenen Ansprüche, **dadurch gekennzeichnet, dass** der Lageparameter x' im Bereich von 9 bis 28 µm, vorzugsweise im Bereich von 10 bis 26 µm, vorzugsweise im Bereich von 12 bis 24 µm, vorzugsweise im Bereich von 14 bis 22 µm, vorzugsweise im Bereich von 16 bis 20 µm, liegt.

10. Tonerdezement nach einem der vorangegangen Ansprüche, **dadurch gekennzeichnet, dass** er mindestens 0,1 Gew.-% Kohlenstoff enthält, vorzugsweise mindestens 0,5 Gew.-%, vorzugsweise mindestens 1 Gew.%.

11. Binder in einer bauchemischen Formulierung, **dadurch gekennzeichnet, dass** der Binder einen Tonerdezement nach einem der vorangegangen Ansprüche umfasst.

12. Binder in einer feuerfesten Formulierung, **dadurch gekennzeichnet, dass** der Binder einen Tonerdezement nach einem der vorangegangen Ansprüche 1 - 10 umfasst.

13. Verwendung eines Tonerdezements nach einem der vorangegangenen Ansprüche 1 bis 10 als Bindemittelkomponente in Rezepturen der bauchemischen Industrie oder der Feuerfestindustrie.

## Claims

1. Aluminous cement, **characterized in that** it contains at least 75 wt.% and at most 89 wt.% monocalcium aluminate, CA in crystalline or amorphous form or as a mixture of crystalline and amorphous fractions, wherein it contains at least 53 wt.% aluminum oxide calculated as Al₂O₃ and has an A/C value based on wt.% in the range of from 1.45 to 1.85, wherein it contains at most 39 wt.% calcium oxide, wherein it has a Blaine fineness in the range of from 3500 to 6000 cm²/g, wherein it has a slope n in the range of from 0.7 to 1.5, and has a position parameter x' of 8-30 µm in an RRSB particle size grid according to DIN 66145 and its color in the L*a*b* color system is in the range of values: L* < 85, preferably < 80.

2. Aluminous cement according to claim 1, **characterized in that** it contains at least 0.1 wt.%, preferably at least 0.15 wt.%, preferably at least 0.5 wt.%, preferably at least 1 wt.%, preferably at least 1.5 wt.%, preferably at least 2 wt.%, preferably at least 2.5 wt.%, preferably at least 3 wt.%, preferably at least 3.5 wt.%, preferably at least 4 wt.%, iron calculated as Fe₂O₃.

3. Aluminous cement according to any of the preceding claims, **characterized in that** it contains at most 10 wt.%, preferably at most 9 wt.%, preferably at most 8 wt.%, preferably at most 7.5 wt.%, preferably at most 7 wt.%, preferably at most 6.5 wt.%, preferably at most 6 wt.%, preferably at most 5.5 wt.%, preferably at most 5 wt.%, iron calculated as Fe₂O₃.

4. Aluminous cement according to any of the preceding claims, **characterized in that** it contains at least 0.2 wt.%, preferably at least 0.3 wt.%, preferably at least 0.4 wt.%, preferably at least 1 wt.%, preferably at least 0.5 wt.%, preferably at least 0.6 wt.%, preferably at least 0.7 wt.%, preferably at least 0.8 wt.%, preferably at least 1 wt.%, preferably at least 2 wt.%, silicon dioxide calculated as SiO₂.

5. Aluminous cement according to any of the preceding claims, **characterized in that** it contains at most 4 wt.%, preferably at most 3.8 wt.%, preferably at most 3.6 wt.%, preferably at most 3.4 wt.%, preferably at most 3.2 wt.%, preferably at most 3 wt.%, preferably at most 2.8 wt.%, preferably at most 2.6 wt.%, preferably at most 2.4 wt.%, silicon dioxide calculated as SiO₂.

6. Aluminous cement according to any of the preceding claims, **characterized in that** it contains at least 77 wt.% and at most 87 wt.% CA, preferably at least 79 wt.% and at most 85 wt.% CA, preferably at least 81 wt.% and at most 83 wt.% CA.

7. Aluminous cement according to any of the preceding claims, **characterized in that** the slope n is in the range of from 0.8 to 1.4, preferably in the range from 0.9 to 1.3, preferably in the range from 1 to 1.2.

8. Aluminous cement according to any of the preceding claims, **characterized in that** it has a Blaine fineness in the range of from 3700 to 5500 cm²/g, preferably 4000 to 5200 cm²/g, preferably 4200 to 5000 cm²/g, preferably 4400 to 4800 cm²/g.

9. Aluminous cement according to any of the preceding claims, **characterized in that** the position parameter x' is preferably in the range of from 9 to 28 µm, preferably in the range of from 10 to 26 µm, preferably in the range of from 12 to 24 µm, preferably in the range of from 14 to 22 µm, preferably in the range of from 16 to 20 µm.

10. Aluminous cement according to any of the preceding claims, **characterized in that** it contains at least 0.1 wt.% carbon, preferably at least 0.5 wt.%, preferably at least 1 wt.%.

11. Binder in a construction chemical formulation, **characterized in that** the binder comprises an aluminous cement according to any of the preceding claims.

12. Binder in a refractory formulation, **characterized in that** the binder comprises an aluminous cement according to any of the preceding claims 1-10.

13. Use of an aluminous cement according to any of the preceding claims 1 to 10 as a binding agent component in compositions in the construction chemicals industry or the refractory industry.

## Revendications

1. Ciment alumineux, **caractérisé en ce qu'**il contient au moins 75 % en poids et au plus 89 % en poids d'aluminate monocalcique, CA sous forme cristalline ou amorphe ou en tant que mélange composé de parts cristallines et amorphes, dans lequel il contient au moins 53 % en poids d'oxyde d'aluminium calculé en tant qu'Al₂O₃ et une valeur A/C basée sur un % en poids dans la plage de 1,45 à 1,85, dans lequel il contient au plus 39 % en poids d'oxyde de calcium, dans lequel il présente une finesse de broyage selon Blaine dans la plage de 3 500 à 6 000 cm²/g, dans lequel il présente une pente n dans la plage de 0,7 à 1,5 et un paramètre de position x' de 8-30 µm dans un réseau de granulation RRSB selon DIN 66145 et sa couleur dans le système de couleur L^{*}a^{*}b^{*} se situe dans la plage de valeurs : L^{*} < 85, de préférence < 80.

2. Ciment alumineux selon la revendication 1, **caractérisé en ce qu'**il contient au moins 0,1 % en poids, de préférence au moins 0,15 % en poids, de préférence au moins 0,5 % en poids, de préférence au moins 1 % en poids, de préférence au moins 1,5 % en poids, de préférence a u moins 2 % en poids, de préférence au moins 2,5 % en poids, de préférence au moins 3 % en poids, de préférence au moins 3,5 % en poids, de préférence au moins 4 % en poids de fer, calculé en tant que Fe₂O₃.

3. Ciment alumineux selon l'une quelconque des revendications précédentes, **caractérisé en ce qu'**il contient au plus 10 % en poids, de préférence au plus 9 % en poids, de préférence au plus 8 % en poids, de préférence au plus 7,5 % en poids, de préférence au plus 7 % en poids, de préférence au plus 6,5 % en poids, de préférence au plus 6 % en poids, de préférence au plus 5,5 % en poids, de préférence au plus 5 % en poids de fer calculé en tant que Fe₂O₃.

4. Ciment alumineux selon l'une quelconque des revendications précédentes, **caractérisé en ce qu'**il contient au moins 0,2 % en poids, de préférence au moins 0,3 % en poids, de préférence au moins 0,4 % en poids, de préférence au moins 1 % en poids, de préférence au moins 0,5 % en poids, de préférence au moins 0, 6 % en poids, de préférence au moins 0,7 % en poids, de préférence au moins 0,8 % en poids, de préférence au moins 1 % en poids, de préférence au moins 2 % en poids d'oxyde de silicium, calculé en tant que SiO₂.

5. Ciment alumineux selon l'une quelconque des revendications précédentes, **caractérisé en ce qu'**il contient au plus 4 % en poids, de préférence au plus 3,8 % en poids, de préférence au plus 3,6 % en poids, de préférence au plus 3,4 % en poids, de préférence au plus 3,2 % en poids, de préférence au plus 3 % en poids, de préférence au plus 2,8 % en poids, de préférence au plus 2,6 % en poids, de préférence au plus 2,4 % en poids d'oxyde de silicium, calculé en tant que SiO₂.

6. Ciment alumineux selon l'une quelconque des revendications précédentes, **caractérisé en ce que** contient au moins 77 % en poids et au plus 87 % en poids de CA, contient de préférence au moins 79 % en poids et au plus 85 % en poids de CA, contient de préférence au moins 81 % en poids et au plus 83 % en poids de CA.

7. Ciment alumineux selon l'une quelconque des revendications précédentes, **caractérisé en ce que** la pente n se situe dans la plage de 0,8 à 1,4, de préférence dans la plage de 0,9 à 1,3, de préférence dans la plage de 1 à 1,2.

8. Ciment alumineux selon l'une quelconque des revendications précédentes, **caractérisé en ce qu'**il présente une finesse selon Blaine dans la plage de 3700 à 5500 cm²/g, de préférence 4000 à 5200 cm²/g, de préférence 4200 à 5000 cm²/g, de préférence 4400 à 4800 cm²/g.

9. Ciment alumineux selon l'une quelconque des revendications précédentes, **caractérisé en ce que** le paramètre de position x' se situe dans la plage de 9 à 28 µm, de préférence dans la plage de 10 à 26 µm, de préférence dans la plage de 12 à 24 µm, de préférence dans la plage de 14 à 22 µm, de préférence dans la plage de 16 à 20 µm.

10. Ciment alumineux selon l'une quelconque des revendications précédentes, **caractérisé en ce qu'**il contient au moins 0,1 % en poids de carbone, de préférence au moins 0,5 % en poids, de préférence au moins 1 % en poids.

11. Liant dans une formulation dans le domaine de la chimie du bâtiment, **caractérisé en ce que** le liant comprend un ciment alumineux selon l'une quelconque des revendications précédentes.

12. Liant dans une formulation réfractaire, **caractérisé en ce que** le liant comprend un ciment alumineux selon l'une quelconque des revendications précédentes 1-10.

13. Utilisation d'un ciment alumineux selon l'une quelconque des revendications précédentes 1 à 10 en tant que composant de liant dans des préparations de l'industrie chimique du bâtiment ou de l'industrie des réfractaires.
